Europäisches Patentamt

**European Patent Office**

Office européen des brevets

(11) Numéro de publication: **0 277 898**
**A1**

(12) **DEMANDE DE BREVET EUROPEEN**

(21) Numéro de dépôt: **88460001.6**

(22) Date de dépôt: **08.01.88**

(51) Int. Cl.⁴: **F 16 L 7/00**
**F 24 D 3/10, E 03 C 1/04**

(30) Priorité: **12.01.87 FR 8700306**

(43) Date de publication de la demande:
**10.08.88 Bulletin 88/32**

(84) Etats contractants désignés:
**DE ES FR GB IT SE**

(71) Demandeur: **Legris-Société Anonyme dite**
**29, rue de la Palestine**
**F-35014 Rennes Cedex (FR)**

(72) Inventeur: **Belisaire, Daniel**
**2 avenue de la Hublais**
**F-35510 Cesson-Sévigné (FR)**

(74) Mandataire: **Dubreuil, Annie**
**Cabinet DUBREUIL Le Suffren 17 rue des Peupliers**
**F-56100 Lorient (FR)**

(54) **Boîtier destiné au passage des fluides sous pression dans la maçonnerie.**

(57) L'invention concerne un boîtier destiné au passage de fluides sous pression dans les maçonneries de faible épaisseur, notamment des cloisons. Le boîtier (1), lié solidairement à une gaine (4) en plastique, également noyée dans la maçonnerie (2), permet l'installation de tubes (5) en plastique pour les fluides sous pression. Le dit tube (5) traverse avec un jeu radial le boîtier et la gaine, ce qui permet de le changer pour un entretien éventuel. Le boîtier (1) de forme parallélépipédique possède une large ouverture sur laquelle est mis un couvercle (3). Ce couvercle porte le raccordment du tube (5) constitué par des moyens de tenue et des moyens d'étanchéité.

L'application de tels boîtiers est importante dans le domaine du sanitaire, mais aussi dans la distribution des liquides et des gaz pour l'industrie.

FIG.1

EP 0 277 898 A1

Bundesdruckerei Berlin

**Description**

## BOITIER DESTINE AU PASSAGE DES FLUIDES SOUS PRESSION DANS LA MACONNERIE

L'invention concerne des boîtiers à noyer dans la maçonnerie et destinés à rendre facile et bon marché le passage de tubes plastique pour fluide sous pression, lors de leur première installation et de leur entretien futur, le peu qui existe de boîtier dans le commerce ne donnant pas vraiment satisfaction.

Dans la distribution d'eau sanitaire où, de plus en plus, on utilise des tubes plastique, il est absolument nécessaire de passer ces tubes dans la maçonnerie.

En effet, ces tubes sont inesthétiques et se déforment beaucoup par dilation, et il est donc nécessaire de les cacher. Il est également impératif de pouvoir les passer après que la maçonnerie ait été terminée, et de pouvoir les changer en cas de problème. D'où l'oblitation de les faire glisser dans des gaines appropriées se terminant à chaque extrémité par des boîtiers noyés dans la maçonnerie. Les boîtiers doivent tenir la gaine solidement pendant la coulée du ciment ou du plâtre et résister aux efforts auxquels le matériel est soumis sur un chantier de construction.

Le domaine d'emploi de l'invention est plus spécialement la distribution d'eau sanitaire, mais elle trouve également des applications dans l'industrie, les laboratoires, l'agriculture, ainsi que dans la distribution de gaz par tubes en plastique.

L'invention concerne des boîtiers spécialement étudiés pour être inclus dans des maçonneries de faible épaisseur, par exemple les cloisons, ou des dalles de ciment de faible épaisseur: entre 10 cms et 5 cms. En particulier, lesdits boîtiers peuvent servir de support à la fixation d'un robinet, mais aussi pour faire ressortir de la maçonnerie un tube plastique sous pression. Dans le commerce, il existe assez peu de boîtiers de ce type à noyer dans la maçonnerie, et ceux-ci ne donnent pas réellement satisfaction, car l'installation des boîtiers et des tubes n'est plas facile. Pour ce type de boîtiers, on peut citer le brevet américain 4.307.901. Néanmoins, le boîtier décrit présente l'inconvénient d'avoir une ouverture de faible dimension, par laquelle il est assez difficile de passer les raccords et les tubes. De plus, il ne permet que l'arrivée d'un tube et procure uniquement un plan de pose métallique et taraudée pour la fixation d'un robinet, mais non la possiblité de faire sortir un tuyau de la maçonnerie.

Les boîtiers selon l'invention sont réalisés pour le passage d'un seul tube dans une maçonnerie mince de 5 à 10 cms d'épaisseur. Ils ne présentent pas les inconvénients des boîtiers du commerce et satisfont aux conditions suivantes:

La présente invention concerne plus particulièrement un boîtier destiné au passage de fluides sous pression dans les maçonneries de faible épaisseur, notamment des cloisons, ledit boîtier étant constitué d'une enveloppe creuse en matière plastique noyée dans la maçonnerie, et relié solidairement à des gaines en plastique également noyées dans la maçonnerie, pour permettre l'installation d'un tube en matière plastique véhiculant des fluides sous pression, ledit tube tranversant avec un jeu radial le boîtier et les gaines de sorte qu'il est possible de le remplacer lors d'un entretien éventuel. Le boîtier est caractérisé en ce qu'il a un dessus rectangulaire lisse affleurant la maçonnerie et une forme générale parallélépipédique sur laquelle une tubulure cylindrique de faible longueur reçoit une gaine tubulaire en matière plastique rigide noyée dans la cloison et solidarisée avec le boîtier par des dents d'accrochage étanches aux plâtre et ciments liquides au moyen d'un bourrelet serrant le tube. Le boîtier est évidé dans sa quasi-totalité, suffisamment pour que le passage du tube soit simple et que ce dernier puisse coopérer avec des moyens de raccordement démontables susceptibles d'être intégrés à l'intérieur dudit boîtier.

On comprendra mieux les avantages, les fonctions, la facilité d'emploi et les progrès amenés par les boîtiers suivant l'invention à l'examen des dessins suivants, parmi lesquels:

la Fig. 1 est une vue en coupe d'un boîtier suivant l'invention, noyé dans la maçonnerie, auquel arrive un tube sous pression, et pourvu d'un moyen de raccordement à un robinet.

la Fig. 2 est une vue en coupe du même boîtier, noyé dans la maçonnerie, mais équipé d'un couvercle et d'un fond de boîtier permettant de faire sortir un tube sous pression parallèlement à la maçonnerie.

la Fig. 3 est identique à la Fig. 2, mais la sortie du tube sous pression se fait perpendiculairement à la maçonnerie,

la Fig. 4 est une vue en coupe d'un boîtier noyé dans la maçonnerie, dont le couvercle est retiré, pour faciliter l'installation du tube sous pression,

la Fig. 5 montre l'installation du couvercle de la Fig. 1 sur l'extrémité du tube sous pression,

la Fig. 6 montre le boîtier des Figs. 1 et 2 sans couvercle, et la façon de glisser derrière le tube sous pression le fond de boîtier,

la Fig. 7 est une vue en coupe du couvercle des Figs. 2 et 3, dont une capsule a été poinçonnée pour réaliser une ouverture permettant de passer le tube sous pression,

la Fig. 8 est une vue en coupe d'un boîtier complet, tel que celui des Figs. 2 et 3, noyé dans la maconnerie,

la Fig. 9 est une vue en coupe du boîtier de la Fig. 1 complet et prêt à être noyé dans la maçonnerie,

la Fig. 10 est une vue en coupe d'un boîtier coulé dans la maçonnerie sans couvercle,

la Fig. 11 est une vue en coupe d'un couvercle, tel que celui de la Fig. 1, complet et prêt à être monté sur un boîtier,

la Fig. 12 est une vue en coupe du couvercle de la Fig. 8,

la Fig. 13 est une vue en coupe du fond de boîtier des Figs. 2, 3 et 8,

la Fig. 14 montre, en coupe, le moyen qui sert à réaliser le blocage et l'étanchéité d'un tube sur le couvercle des Figs. 1, 5 et 11,

la Fig. 15 représente une variante du couvercle des Figs. 1, 5 et 11,

la Fig. 16 est une vue en plan d'un moyen de fixation du tube sous pression, de façon irréversible, dans un boîtier,

la Fig. 17 est une vue en plan d'un joint parallélépipédique établissant l'étanchéité sur le tube sous pression,

la Fig. 18 est une vue en coupe selon la ligne A-B de la Fig. 16,

la Fig. 19 est une vue en coupe selon la ligne C-D de la Fig. 17,

la Fig. 20 est une vue en plan d'une pièce servant à tenir un tube sous pression par serrage sur celui-ci,

la Fig. 21 montre la section d'un joint de surface rectangulaire mais de fond galbé,

la Fig. 22 est une vue en plan de deux pièces découpées minces, travaillant à l'opposition, glissant l'une sur l'autre et servant à tenir un tube sous pression, par compression sur celui-ci,

la Fig. 23 est une vue en coupe selon la ligne E-F de la Fig. 15 et

la Fig. 24 est une vue en coupe d'un boîtier pourvu d'une pièce de raccordement orthogonal, avec un système de connexion instantanée.

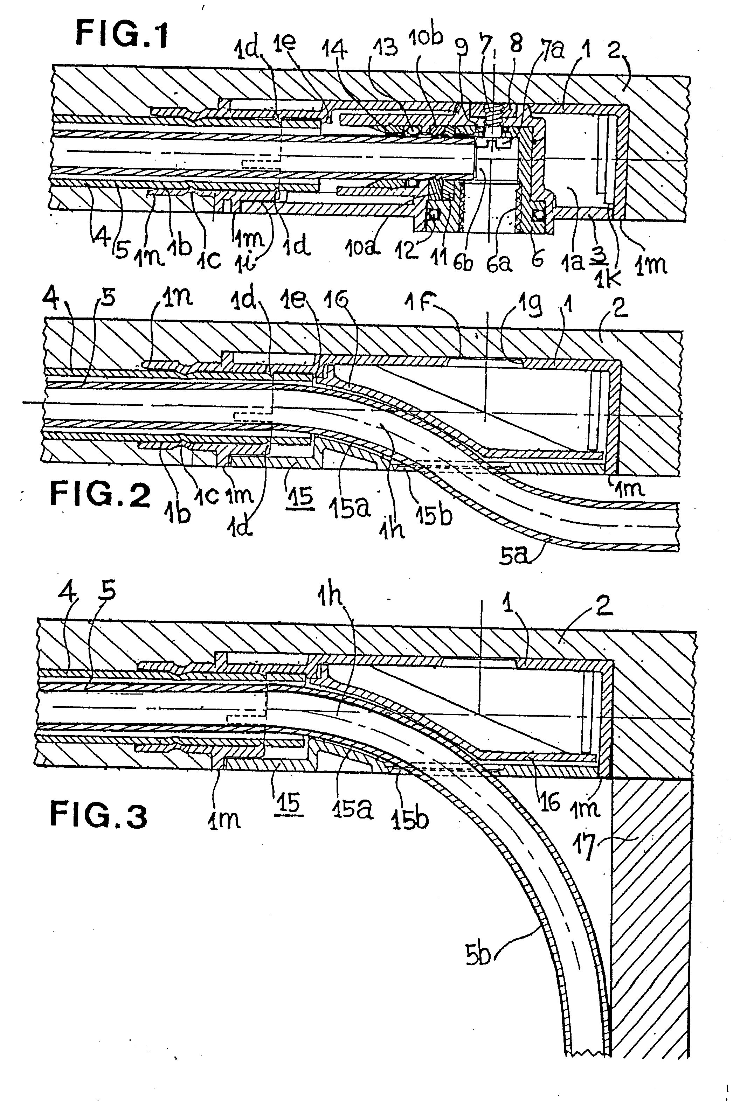

Le boîtier (1) de la Fig. 1 est noyé dans une maçonnerie (2), avec une gaine (4), un tube sous pression (5) et un couvercle (3), représenté seul à la Fig. 11. Le tube (5) est rendu solidaire du couvercle (3) du boîtier (1).

En variante, aux Figs. 2 et 3, le tube (5) passe dans le boîtier (1) et sort directement à travers un couvercle (15).

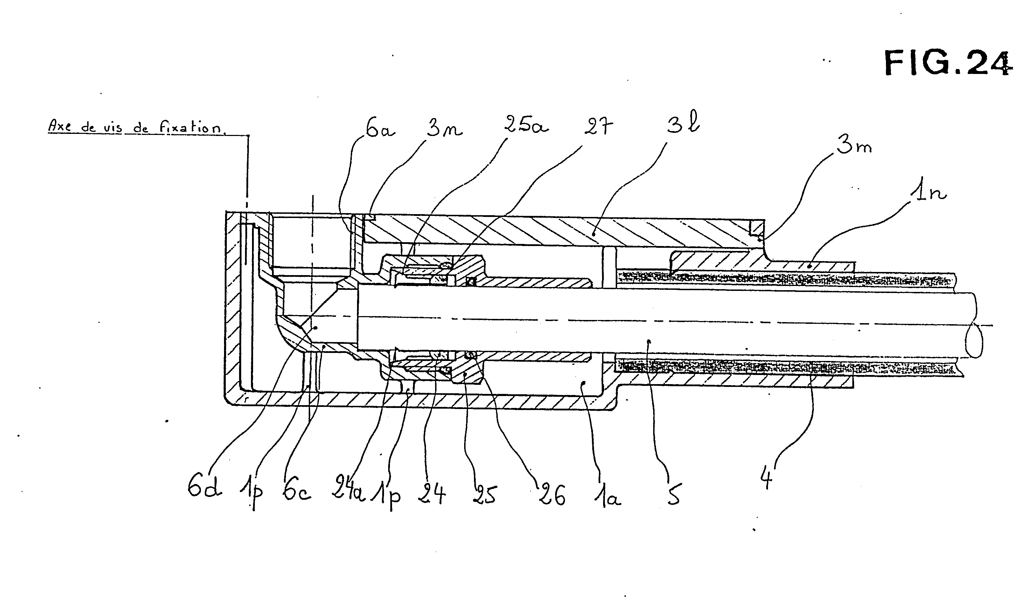

En variante, encore, à la Fig. 24, le tube (5) est connecté à un raccord instantané (27) fixé au boîtier (1) qui est muni, dans ce cas, d'un couvercle de fermeture (31).

Le boîtier (1) a un dessus rectangulaire (1m) lisse affleurant la maçonnerie mince (2). Il a une forme générale parallélépipédique, sur laquelle une tubulure cylindrique courte (1n) a reçu une gaine (4) en tube épais en matière plastique, noyée dans la cloison. La gaine (4) est solidarisée avec le boîtier (1) par des dents (1d) d'accrochage, dont une est fixe au fond du boîtier et l'autre légèrement déplaçable par élasticité. Ceci permet de réaliser un accrochage total et définitif de la gaine sur le boîtier ainsi solidarisés entre eux. La gaine est rendue étanche au ciment liquide ou au plâtre par le bourrelet (1c) qui donne un léger serrage sur cette gaine, garantissant ainsi cette étanchéité. Le boîtier (1) est évidé sur sa totalité suivant le logement (1a). Les dimensions du boîtier, sa longueur en particulier, sont suffisantes pour le passage facile du tube lors du montage sur le couvercle (3). Le boîtier (1) de la figure 1 est équipé du couvercle qui permet l'arrivée d'une extrémité du tube (5), et à la fois son étanchéité et sa tenue. Le boîtier complet avec son couvercle (3) fournit le plan de pose taraudée (6a) destiné à la fixation robuste d'un robinet standard du commerce. Le couvercle (3) possède une pièce métallique (6) amovible qui, sous l'effet de serrage d'une vis (7) vissée dans un écrou (8), comprime des pièces de tenue (10a) et (10b), pourvues de dents pointues, sur le tube (5), procurant ainsi une parfaite tenue de ce tube. Ce serrage est calculé et limité. Il est impossible de trop serrer le tube.

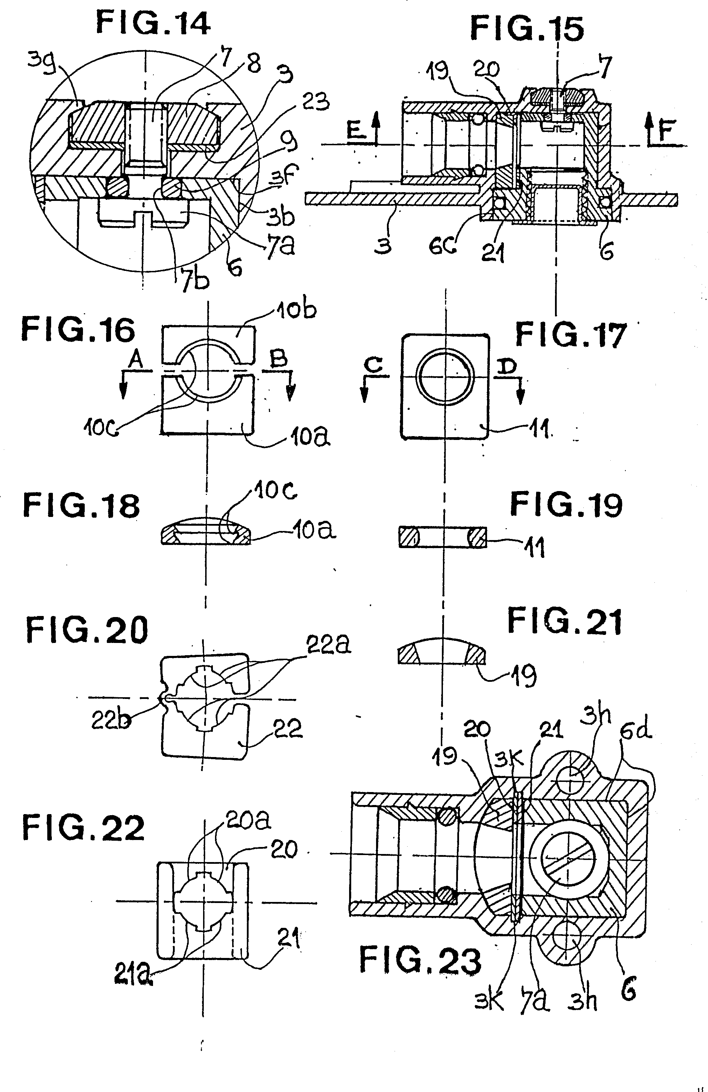

Par le même serrage de la vis (7) sur la pièce (6), on obtient la compression en boîte fermée d'un joint d'étanchéité (11) du tube (5) et, par conséquent, une étanchéité parfaite et durable. Ainsi, sachant que la pièce (6) est une pièce métallique robuste et que le couvercle (3) est réalisé en un plastique de haute qualité, on peut s'apercevoir que le liquide n'est jamais en contact avec le boîtier. Les étanchéités sont doublées sur toutes les issues de fuites possibles. Sur le tube (5), un joint (13) réalise une double étanchéité. Sous l'écrou (8), un joint (23), visible à la Fig. 14, est placé et fortement comprimé en boîte, doublant l'étanchéité d'un joint torique (9) déjà placé sur la vis. Sur la pièce (6) un joint torique (12) assure une double étanchéité en plus du joint (11). Ainsi on peut constater que le système garantit une double étanchéité à toutes les issues de fuites possibles. Il est également remarquable de savoir que les joints peuvent être changés de façon périodique ou en cas de besoin. Il est remarquable que les pièces de tenue (10a), (10b) et le joint 11 sont comprimés par la pièce (6) sur le tube (5), dans une boîte entièrement fermée, par l'intermédiaire d'une seule vis de fixation (7). Ce système est extrêmement pratique et il n'y a besoin que d'un tournevis ordinaire pour monter ou démonter un tube plastique d'alimentation sous pression. La vis (7) et l'acrou (8) sont en matière de grande dureté, permettant un serrage intense, sans aucun risque de rupture de l'un de ces deux éléments.

Une des fonctions remarquables de la vis (7) est que la tête de cette vis (7a) sert de butée au tube (5), de façon bien visible pour l'installateur par le trou taraudé (10a). Ainsi l'installateur ne fera le blocage de cette vis (7) que lorsqu'il aura vu (par le trou taraudé (10a)) que le tube (5) est bien en butée sur la tête de vis (7a). Cette précaution garantit un parfait montage du tube. Le contrôle de la bonne installation est donc extrêmement simple. On voit également que le tube (5) est guidé dans la pièce (3) par un guide-tube (14) possédant une entrée conique qui facilite beaucoup la rentrée dudit tube.

Une des caractéristiques de l'invention est que ce boîtier est réalisé pour la réception ou la traversée d'un seul tube sous pression. Il est donc de faible encombrement et peut se loger partout, dans toutes les maçonneries de faible épaisseur, de l'ordre de 5 à 10 centimètres. On voit également sur ce boîtier que le couvercle (3) est parfaitement encastré dans la boîte (1), affleurant parfaitement la surface du boîtier (1m) et également la maçonnerie (2). Le couvercle (3) est fixé solidement par plusieurs vis dans les angles du parallélépipède du corps (1). Ces vis ne sont pas représentées sur les dessins, mais il s'agit de vis standardisées à tête fraisée, affleurant la face (1m) du boîtier. Le couvercle (3) repose par des portées d'appui solides (1i) et (1k) sur le boîtier (1).

Une caractéristique importante du boîtier représenté à la figure 1 est la possibilité du démontage du tube (5) et de son changement sans démonter le couvercle (3), de la façon suivante: d'abord on desserre la vis (7) de trois tours environ. Ceci a pour effet de débloquer la pièce (6) et de décomprimer les pièces d'accrochage (10a) et (10b) et le joint (11). Le tube (5) est ainsi libéré et il peut être retiré à son extrémité. Alors, on introduit un tube neuf qui, guidé par la gaine (4), arive et se centre automatiquement dans le guide-tube (14). Ensuite, le tube poussé avec énergie traverse le joint (13), les pièces de tenue (10b) et (10a), le joint (11), et il vient enfin buter sur la tête de vis (7a). Lorsque l'installateur a aperçu que le tube (5) est bien venu en butée sur la vis (7a), le montage est terminé et il n'y a plus qu'à bloquer la vis (7). Ceci a pour effet de resserrer et d'agripper le tube par les mors de tenue (10a) et (10b) et de bloquer en boîte fermée avec énergie le joint (11). Ainsi, le passage d'un tube (5) est d'une très grande simplicité et d'une très grande rapidité. Aucun système antérieur, avec des tubes cuivre, ne peut permettre une telle rapidité d'entretien et de changement d'un tube et, ce système ne peut donc être concurrencé.

Une caractéristique de l'entretien et du démontage général des joints d'étanchéité est un point important de l'invention. Cela se fait de la façon suivante, sans avoir à démonter le couvercle (3) qui peut évidemment être recouvert de carrelage ou de moquette:

Déviser complétement la vis (7). Le tube (5) peut, par son autre extrémité, être tiré axialement de deux ou trois centimètres (cela est toujours possible). Alors la pièce (6) peut être retirée, tous les joints (9), (11), (12) et (13) sont remplacés par des joints neufs. Les pièces sont ensuite replacées sans bloquer la vis (7). Le tube (5) est repoussé dans la raccord jusqu'à buter sur la tête de vis (7a). Alors, il est parfaitement remonté. Il suffit ensuite de rebloquer la vis (7) énergiquement, pour fixer et étancher le tube (5). On a ainsi réalisé l'entretien rapide et sans problème de touts les joints. Cet entretien peut être effectué à des périodes prévues. Quoi qu'il en soit, il est possible de le faire en cas de besoin ou d'urgence.

A la Fig. 1 on peut également constater que la gaine (4) est enfilée jusqu'à une butée préparée dans le boîtier (1e). La gaine est ainsi enfilée le plus loin possible, de sorte qu'elle se rapproche beaucoup du couvercle (3) formant avec celui-ci un conduit presque continu qui sert de guidage au tube (5).

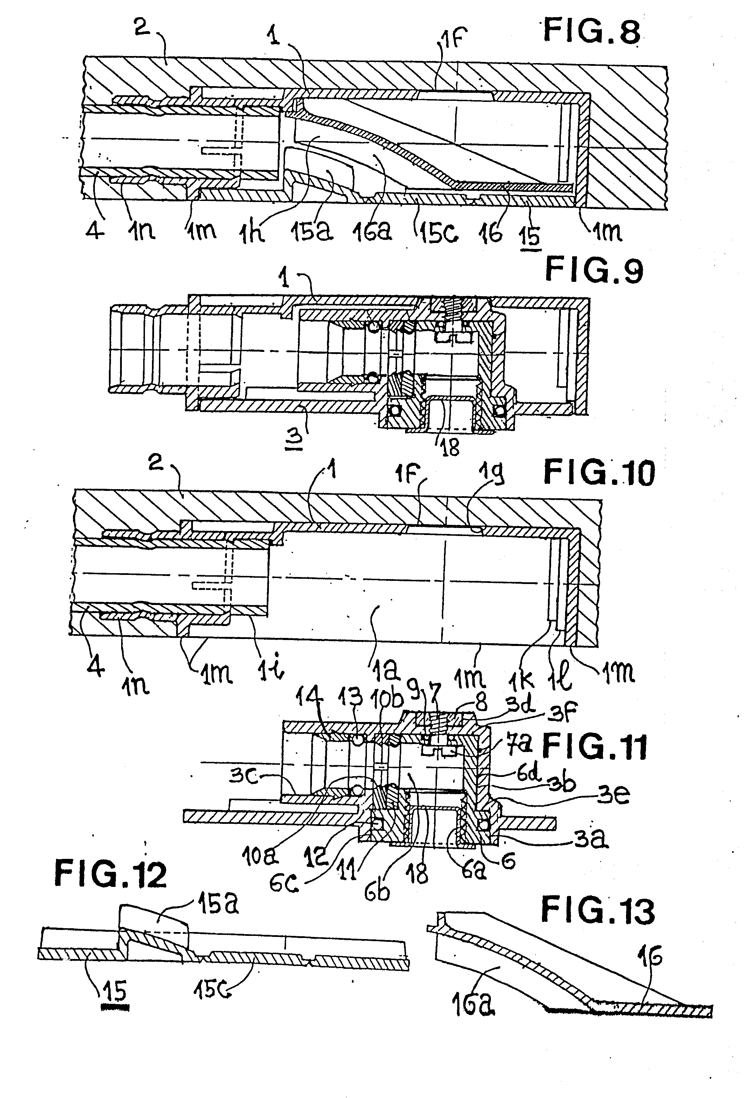

La Fig. 2 montre un boîtier (1) noyé dans une maçonnerie (2), complet et équipé avec un couvercle (15), Fig. 12, et un fond de boîtier (16), Fig. 13, pour former une sortie de tube à travers le boitier et permettre au tube (5) de venir parallèlement à la cloison (2) en (5a) et ainsi d'aller sur un appareil quelconque extérieur à cette cloison. Inversement, un tube (5) parallèle à une cloison (5a) rentre à travers un maçonnerie pour aller ressortir à l'autre bout de cette maçonnerie, dans laquelle il a été dissimulé proprement. Le boîtier (1) est exactement le même que celui de la Fig. 1. On y monte un autre couvercle (15) et un fond de boîtier (16). Le tube (5) traverse le couvercle (15) par une lumière (15b) et ensuite longe la maçonnerie (2). Ceci permet de cacher le tube (5) dans une partie de la maçonnerie et de le faire sortir de cette maçonnerie, soit pour aller à un appareil ou à un branchement quelconque.

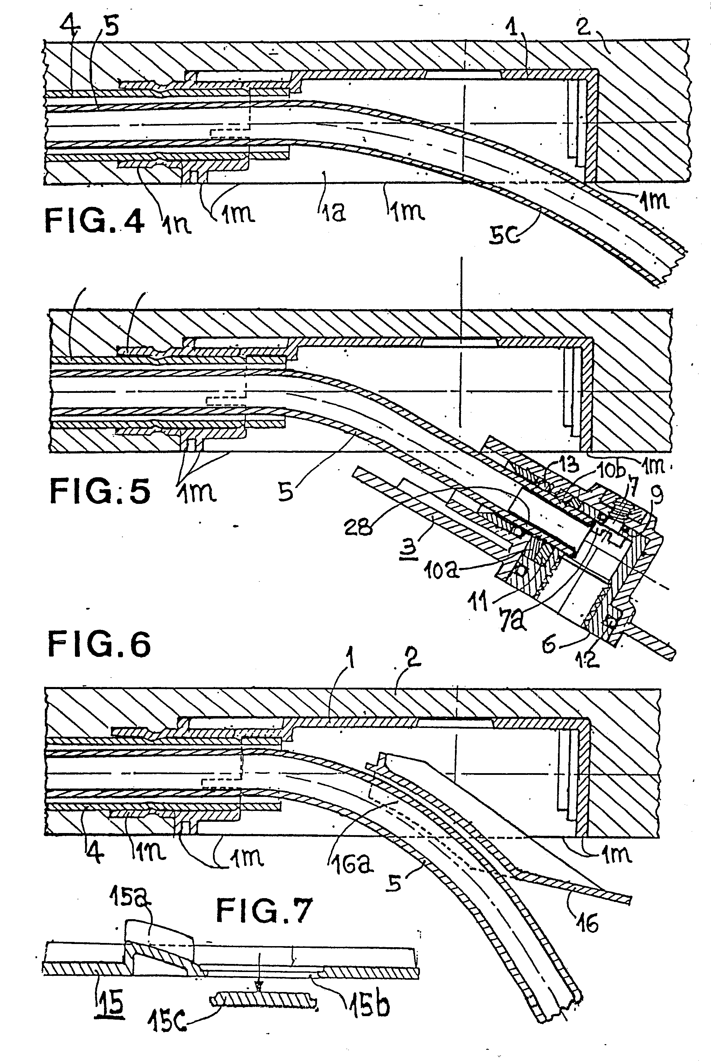

Une caractéristique importante consiste dans le montage des tubes qui leur permet de traverser le boîtier et de sortir de la maçonnerie de la façon suivante. Lorsque le boîtier a été noyé dans la maçonnerie, on démonte le couvercle (15) et le fond de boîtier (16). On obtient donc un boîtier ouvert, Fig. 10, et deux pièces détachées (15) et (16), Figs. 12 et 13. Ensuite, on glisse avec beaucoup de facilité le tube (5) dans la gaine (4) comme cela est visible à la Fig. 4. La large ouverture (1a) du boîtier permet de passer le tube avec une grande courbure, sans le faire plier de trop. Ensuite, on courbe légèrement le tube (5) de façon à pouvoir glisser derrière le fond de boîter (16) comme cela est visible à la Fig. 6. Puis on poinçonne une capsule (15c) que l'on sépare du couvercle (15), comme cela est visible à la Fig.7 et on replace le couvercle. L'on obtient alors le montage de la Fig. 2. Il est à noter que le couvercle (15) est fixé solidement avec plusieurs vis dans les angles du boîtier parallèlépipédique (1). Ces vis ne sont pas représentées. L'on courbe enfin le tube (5) suivant (5a), parallèlement à la maçonnerie (2).

Une autre caractéristique importante est qu'il est possible de changer le tube (5) traversant le boîtier sans démonter le couvercle (15) ni le fond de couvercle (16), de la manière suivante: on fait glisser le tube (5) axialement dans le guide-tube cintré (1h) formé par les pièces (15) et (16) assemblées, on l'enlève et on en glisse un neuf. Le jeu radial prévu entre le tube (5), d'une part, et la gaine (4), le guide (1h) et le trou de passage (15b) dans le couvercle, d'autre part, permet de faire cette opération de changement de tube. Cela est donc important, même si le couvercle du boîtier a été recouvert par du carrelage ou de la moquette.

Une autre caractéristique importante est que l'on peut, si le couvercle (15) n'a pas été recouvert de moquette, de peinture ou de carrelage, simplement dévisser celui-ci et sortir le fond de boîtier (16). Pour changer le tube (5), on se retrouve alors dans la situation de la Fig. 4, dans laquelle le passage du tube est grandement facilité. Après avoir changé le tube (5) par un tube neuf, on remonte l'ensemble des pièces (15) et (16), comme on l'a expliqué ci-dessus.

A la Fig.3, à la sortie du tube (5) par le trou (15b) du couvercle (15), on cambre le tube (5) suivant (5b), c'est-à-dire de façon perpendiculaire à la maçonnerie (2) et parallèlement à la maçonnerie (17).

On a ainsi, avec ce système de traversée du boîtier par le tube, la possibilité de partir soit parallèlement, soit perpendiculairement à la maçonnerie (2).

La Fig. 4 montre un boîtier (1) noyé dans la maçonnerie (2), dont les couvercles ont été enlevés pour laisser apparaître la large ouverture (1a) d'accès du boîtier selon l'invention. On voit également là une caractéristique importante du brevet selon laquelle le montage du tube se fait par une large ouverte (1a) du boîtier (1). En effet, le tube (5) est monté dans le boîtier et en sort suivant une grande courbure (5c), de sorte que son passage axial dans la maçonnerie (2) et la gaine (4), se fait facilement et avec de faibles contraintes. Cette caractéristique est importante puisque les boîtiers de même taille disponibles dans le commerce ne présentent pas cet avantage important de la facilité de passage du tube sous faibles contraintes de courbure (5c).

La Fig. 5 montre la façon dont le tube (5), qui a été sorti de la maçonnerie suivant (5c), est fixé d'une façon très pratique en dehors de la maçonnerie au couvercle (3) et à son ensemble de raccordement constitué par les pièces (10a), (10b), (11), (6) et la vis (7). Comme on l'a déjà vu précédemment le montage est le suivant: desserrer la vis (7) de trois tours environ. Ainsi les mors (10a) et (10b) sont débloqués, la pièce (6) ayant pu se reculer, et le joint (11) est desserré. Il est donc possible d'enfiler le tube (5) à l'intérieur du logement du couvercle (3), jusqu'à ce qu'il arrive en butée sur la tête de vis (7a). Ensuite, il suffit de bloquer à fond la vis (7) pour mettre en place la pièce (6) et ainsi réaliser la compression des pièces d'accrochage (10a) et (10b) sur le tube et également celle du joint (11) en une boîte complétement fermée. On obtient ainsi une tenue et une étanchéité parfaites. Le contrôle de la butée du tube sur la tête (7a) est une caractéristique importante de l'invention. Le tube (5) peut comporter une fourrure de soutien facultative (28) qui sera mise avant son introduction dans le couvercle (3). Les opérations que nous venons de décrire sont grandement facilitées par une très bonne prise manuelle du tube (5) et du couvercle (3). On termine le montage en faisant glisser le tube (5) dans la gaine (4), puis en replaçant le couvercle (3) et en le bloquant sur la boîte (1) par les vis de fixation (non représentées).

A la Fig. 6, le tube (5) a été passé dans la maçonnerie et la gaine (4) suivant la figure 4, et on est en train d'installer derrière le tube (5) le fond de boîtier (16) avec son guide (16a). Une des caractéristiques importantes de l'invention est la façon selon laquelle on place alors les pièces. On plie le tube (5) sur une courbure réduite et on enfile derrière le fond de boîtier (16) avec son guide (16a). On le place au fond du boîtier (1), sur les parties complémentaires disposées à cet effet, comme on peut le voir en position de montage finale à la Fig. 2.

La Fig. 7 montre la façon de préparer le couvercle (15) en poinçonnant la capsule (15c) prédécoupée dans le plastique afin d'obtenir la lumière (15b) par où pourra sortir le tube (5) du boîtier (1).

A la Fig. 8, un boîtier (1) suivant l'invention, équipé de ses pièces (15) et (16), est noyé dans la maçonnerie (2). Selon une caractéristique importante de l'invention, qui est visible à la Fig. 8, la surface lisse du couvercle (15) est de niveau et parfaitement lisse, sans partie gênante, avec la maçonnerie (2). Ainsi il est facile d'établir des maçonneries sans avoir aucune partie qui dépasse, ce qui est un avantage important pour la période où les maçons travaillent dans l'habitation. Il est aussi important de remarquer que le couvercle (15) et la pièce (16) peuvent être, après scellement, enlevés et remplacés par un couvercle (3) qui, lui, présente une partie légèrement dépassante de la maçonnerie. Ainsi on aura pu sceller et noyer le boîtier (1) dans la maçonnerie et ne placer le couvercle (3) qu'au moment du passage de la plomberie et des tubes.

La Fig. 9 montre un boîtier conforme à l'invention prêt à être noyé dans une maçonnerie, et muni d'une capsule de protection (18) nécessaire pendant le scellement du boîtier (1).

La Fig. 10 représente un boîtier (1) qui, ayant été noyé dans la maçonnerie (2), a eu son couvercle enlevé. Ainsi on peut apprécier le grand évidement (1a) du boîtier, la surface (1m) qui affleure la maçonnerie (2), et les portées (1i) (1k) et (1l) réservées aux appuis des pièces internes, pièces qui sont le couvercle (3) ou le couvercle (15) et le fond de boîtier (16). On voit aussi que le couvercle enlevé libère pratiquement la totalité du boîtier.

A la Fig. 15, qui montre une variante en coupe du système d'étanchéité et de tenue du couvercle (3), la tenue du tube sous pression est faite par deux tôles découpées minces (20) et (21), Fig. 22, qui sont repoussées l'une vers l'autre, bloquant ainsi le tube par leurs arêtes (22a) qui viennent pénétrer dans le tube, le tenant d'une façon parfaite. On voit également un joint (19) qui est également visible aux Figs. 21 et 23.

Les deux mors (10a) et (10b) possèdent des arêtes aiguës (10c), Fig. 16, qui par le serrage de la vis (7) et la pression de la pièce (6), viennent serrer le tube et imprimer leurs arêtes (10c) sur lui, le tenant d'une façon parfaite. Ces arêtes sont visibles à la Fig. 18.

Le joint d'étanchéité (11) a une forme parallélépipédique, Fig. 17. Il est percé d'un trou en forme rayonnée, comme cela est visible à la Fig. 19.

La figure 23 montre les formes du joint (19) et des pièces (20) et (21) glissant dans deux glissières (3k) dans le couvercle (3); on peut voir également une caractéristique importante de l'invention, selon laquelle la pièce (6) possède une partie carrée qui épouse les formes complémentaires du couvercle (3). Cette partie carrée (6d) permet une solidarisation contre tout mouvement de rotation effectué sur la pièce (6) et, en particulier, le positionnement et le vissage des robinetteries dans le filetage (6a) visible à la Fig. 11. On voit également la tête de vis (7a) au fond de la pièce (6).

A la figure 24, dans le boîtier (1), est fixé un raccord de forme équerre en appui sur des bossages (1p). Son conduit interne orthogonal (6d) possède, à une de ses extrémités, un moyen creux fileté (6a) permettant le raccordement à un appareil de robinetterie sanitaire (non représenté) et, à son autre extrémité, des organes et des aménagements nécessaires au guidage, à l'étanchéité et à la tenue du tube (5) sur sa paroi extérieure, par l'intermédiaire d'une pince élastique fendue (24), à dents multiples (24a), verrouillée par un cône (25a) d'un organe de guidage (25) qui reçoit un joint annulaire (26) assurant l'étanchéité du tube (5) sur son diamètre extérieur. Ce système instantané de raccordement (27) a fait l'objet des brevets français LEGRIS n°2319833 et 2528531. La gaine (4) est maintenue fixée dans le boîtier (1) de même qu'aux Figs. 1, 2, 3, etc; Le couvercle (31), fixé sur le boîtier (1) par des moyens d'accrochage par encliquetage (3m) (3n), assure la fermeture étanche du boîtier, évitant toute introduction de produits de maçonnerie à l'intérieur de la cavité (1a).

C'est une caractéristique très importante de l'invention que les boîtiers peuvent avoir différents couvercles qui sont porteurs des systèmes, soit d'arrivée du tube, soit de traversée du tube suivant le besoin de l'installateur. De plus, les boîtiers noyés peuvent recevoir des couvercles différents, pouvant réceptionner et fixer des tubes différents, ou permettant de faire traverser des tubes de diamètres différents. Ceci donne encore plus de souplesse d'utilisation. En effet, dans le sanitaire en particulier, on utilise plusieurs dimensions de tube plastique. Dans un autre système on peut avoir des couvercles sur lesquels les systèmes de raccordement sont indépendants et, dans ce cas, lesdits couvercles n'ont aucune relation avec la fixation du tube de raccordement.

Les boîtiers suivant l'invention, étant moulés dans la maçonnerie avec leur gaine de liaison, ce n'est qu'au stade normal de finition de la plomberie, que le réseau sanitaire d'eau chaude et froide sera passé avec un gain de temps appréciable par rapport à la plomberie classique en tube métallique. Les coûts de l'installation du sanitaire se trouvent très réduits, de près de la moitié, par l'économie de la matière, plastique au lieu de cuivre, et l'énorme économie de temps, d'installation des tubes, passés par une main-d'oeuvre bon marché non spécialisée. Ces installations en tube plastique ne demandent pas de soudeurs puisqu'il n'y a aucune soudure.

## Revendications

1. Boîtier destiné au passage de fluides sous pression dans les maçonneries de faible épaisseur, notamment des cloisons constituées d'une enveloppe creuse en matière plastique que l'on noie dans la maçonnerie et que l'on relie solidairement à une gaine en plastique qui est également noyée dans la cloison (2), pour installer un tube (5) en matière plastique véhiculant des fluides sous pression, le dit tube (5) traversant avec un jeu radial le boîtier et la gaine; caractérisé en ce qu'il a un dessus rectangulaire (1m) lisse affleurant la maçonnerie (2) et une forme générale parallélépipédique sur laquelle une tubulure cylindrique (1n) de faible longueur reçoit la dite gaine (4) qui est solidarisée avec le boîtier (1) par des dents d'accrochage (1d), étanches aux plâtre et ciments liquides par un bourrelet (1c) serrant légèrement le tube (5), et en ce qu'il est évidé dans sa quasi-totalité (1a) pour faciliter le passage du tube (5) et rendre ce dernier capable de coopérer avec des moyens de raccordment démontables susceptibles d'être intégrés à l'intérieur (1a) du dit boîtier (1).

2. Boîtier selon la revendication 1, caractérisé en ce qu'il reçoit un couvercle (3) possédant des moyens de tenue (10a), (10b), ou (20), (21), ou (22), du tube (5) et des moyens d'étanchéité à la pression (11), (19) et (13), formant double étanchéité sur le tube (5), le dit couvercle (3) servant d'aboutissement au tube (5) maintenu en place droit et sans coude, et possédant une pièce métallique (6) formant un canal équerre (6b) terminé par un taraudage (6a), la dite pièce (6) étant étanchée par les joints (9) et (12) sur le couvercle (3) et solidarisée au couvercle (3) par une seule vis étanche (7), un joint (9) et un écrou (8) placé dans le couvercle (3).

3. Boîtier selon la revendication 1, caractérisé en ce qu'il reçoit un couvercle (15) et un fond de boîtier (16), le couvercle (15) et le fond de boîtier (16) formant un canal creux, cintré, et à section circulaire (1h), qui sert de guide au tube (5) traversant le dit couvercle (15) par une lumière (15b).

4. Boîtier selon la revendication 1, caractérisé en ce que la connexion du tube (5) à l'intérieur (1a) est réalisée au moyen d'un système de raccordement instantané (27), son accrochage étant réalisé par la pince fendue (24) verrouillée par le cône (25a) de la pièce (25) et son étanchéité réalisée par le joint annulaire (26).

5. Boîtier selon la revendication 1, caractérisé en ce que le couvercle (15) assurant son étanchéité durant son scellement dans la maçonnerie comporte un opercule (15c) ainsi qu'un profil (15a) destiné à coopérer avec le fond du boîtier (15) assurant son étanchéité durant son scellement dans la maçonnerie comporte un opercule (15c) ainsi qu'un profil (15a) destiné à coopérer avec le fond du boîtier (16).

6. Boîtier selon la revendication 5, caractérisé en ce que l'opercule (15c) est poinçonné pour permettre la traversée du tube (5) vers l'extérieur.

7. Boîtier selon la revendication 2, caractérisé en ce que la pièce (6) est maintenue au moyen d'une vis (7) dont la tête sert de butée au tube (5) pour faciliter son positionnement quand on le monte sur le couvercle (3).

8. Boîtier selon la revendication 2, caractérisé en ce que les moyens de tenue (10a), (10b), ou (20), (21), ou (22), et le joint principal (11), (19) du tube (5) sont tenus en place fortement serrés sur le dit tube (5) par la vis unique (7) possédant un joint d'étanchéité (9).

9. Boîtier selon l'une des revendications 2, 4, 7 ou 8, caractérisé en ce que la pièce de raccordement (6), (27) comporte à son extrémité libre des moyens de liaison (6a) destinés au montage d'un robinet.

10. Boîtier selon l'une des revendications 2, 4, 7, 8 or 9, caractérisé en ce que le moyen d'étanchéité (11) du tube (5) est placé entre le couvercle (3) et la pièce métal (6).

11. Boîtier selon l'une des revendications 2, 4, et 7 à 10, caractérisé en ce que les moyens de tenue (20), (21), (22) sont en métal découpé mince, glissés dans deux rainures (3k) du couvercle (3), entre le joint en forme (19) et la pièce métallique (6).

12. Boîtier selon l'une des revendications 2, 4 et 7 à 11, caractérisé en ce que les moyens de tenue du tube (5) sont constitués de deux pièces découpées en métal mince (20) et (21), glissant dans les rainures (3k) et possédant des secteurs d'accrochage (20a), (21a) qui s'opposent pour serrer le tube (5) quand on serre la vis (7) sur la pièce métallique (6).

13. Boîtier selon l'une des revendications 2, 4 et 7 à 11, caractérisé en ce que les moyens de tenue du tube (5) sont en une seule pièce découpée en métal mince (22) élastique, possédant 4 secteurs d'accrochage (22a) sur le tube (5), bloquée par l'effet de serrage de la vis (7) sur la pièce (6).

14. Boîtier suivant l'une des revendications 2, 4 et 7 à 13, caractérisé en ce que la pièce métallique (6) a une partie cylindrique (6c) suivie d'une partie carrée (6d) complémentaire de la partie (3b) carrée du couvercle (3), le dit carré (6d) verrouillant parfaitement en rotation la pièce métallique (6) dans le couvercle (3).

15. Boîtier suivant la revendication 5, caractérisé en ce qu'il est noyé dans la maçonnerie avec le couvercle "lisse" (15), la surface de la maçonnerie (2) pouvant être parfaitement lisse sans partie gênante, et en ce que le couvercle (15) peut ensuite être remplacé par le couvercle (3) pour effectuer le montage du tube (5).

0277898

**FIG.1**

**FIG.2**

**FIG.3**

0277898

FIG.4

FIG.5

FIG.6

FIG.7

0277898

FIG.8

FIG.9

FIG.10

FIG.11

FIG.12

FIG.13

0277898

**FIG.14**

**FIG.15**

**FIG.16**

**FIG.17**

**FIG.18**

**FIG.19**

**FIG.20**

**FIG.21**

**FIG.22**

**FIG.23**

# FIG.24

Axe de vis de fixation.

6a  3m  25a  27  3ℓ  3m  1n

6d  1p  6c  24a  1p  24  25  26  1a  5  4

0277898

Office européen
des brevets

**RAPPORT DE RECHERCHE EUROPEENNE**

Numero de la demande

EP 88 46 0001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 085 329 (G. FISCHER AG) <br> * Figures 1-6; revendication 1; page 4, ligne 8 - page 5, ligne 12 * | 1 | F 16 L 7/00 <br> F 24 D 3/10 <br> E 03 C 1/04 |
| A |  | 2 |  |
|  | --- |  |  |
| X | EP-A-0 191 309 (J. + R. GUNZENHAUSER AG) <br> * Figures 3,4 * | 1 |  |
| A |  | 2 |  |
|  | --- |  |  |
| A | CH-A- 521 033 (WOERTZ) <br> * Figure 1 * | 3 |  |
|  | --- |  |  |
| A | FR-A-2 528 531 (LEGRIS) <br> * Figure 14 * | 4 |  |
|  | --- |  |  |
| A | FR-A-2 319 833 (LEGRIS) <br> * Figure 1 * | 4 |  |
|  | ----- |  |  |

**DOMAINES TECHNIQUES RECHERCHES (Int. Cl.4)**

F 16 L
F 24 D
E 03 C
H 02 G

Le présent rapport a été établi pour toutes les revendications

| Lieu de la recherche | Date d'achèvement de la recherche | Examinateur |
|---|---|---|
| LA HAYE | 25-03-1988 | NARMINIO A. |

EPO FORM 1503 03.82 (P0402)